# EUROPÄISCHE PATENTSCHRIFT

(11) **EP 1 744 867 B1**
(45) Veröffentlichungstag und Bekanntmachung des Hinweises auf die Patenterteilung: **02.12.2009**
(21) Anmeldenummer: 05714689.6
(22) Anmeldetag: 14.03.2005
(51) Int. Cl.: B29C 45/50

(54) **ANTRIEBSANORDNUNG FÜR EINE EINSPRITZEINHEIT IN EINER SPRITZGIESSMASCHINE**
DRIVE ASSEMBLY FOR AN INJECTION UNIT IN AN INJECTION MOULDING MACHINE
ENSEMBLE D'ENTRAINEMENT POUR UNE UNITE D'INJECTION D'UNE MACHINE DE MOULAGE PAR INJECTION

(30) Priorität: 13.05.2004 DE 102004023837
(43) Veröffentlichungstag der Anmeldung: 24.01.2007
(73) Patentinhaber: ProControl AG, 9230 Flawil (CH)
(72) Erfinder: STILLHARD, Bruno, J., CH-9011 St. Gallen (CH)
(74) Vertreter: Gachnang, Hans Rudolf
(86) Internationale Anmeldenummer: PCT/CH2005/000147
(87) Internationale Veröffentlichungsnummer: WO 2005/110708

(56) Entgegenhaltungen:
- EP-A- 1 219 403
- US-A- 5 540 495
- US-B1- 6 406 286

## Beschreibung

Gegenstand der Erfindung ist eine Antriebsanordnung für eine Einspritzeinheit in einer Spritzgiessmaschine gemäss Oberbegriff des Patentanspruchs 1.

Spritzgiessmaschinen mit einer Antriebsanordnung der genannten Gattung sind bekannt. Diese dienen dazu, ein plastifizierbares Material in einen Formhohlraum eines Werkzeugs einzubringen, wobei die Einspritzeinheit derart ausgebildet ist, dass durch geeignete Ansteuerung der Plastifizierschnecke und eines Gewindetriebes beim Einspritzen der Druck und die Einspritzgeschwindigkeit an die Eigenschaften des plastifizierbaren Materials und des zu spritzenden Werkstücks angepasst werden können. Eine solche Spritzgiesseinheit ist z.B. aus der WO 97/18938 A1 bekannt. Bei dieser Spritzgiessmaschine werden die Plastifizierschnecke durch einen ersten Motor zwischen dem hinteren Schneckenende und seinem Drucklager und der Gewindetrieb durch einen zweiten Motor auf der dem Drucklager abgewendeten Seite der Mutter, in der der Gewindetrieb kämmt, angetrieben. Die Mutter und der Gehäuseteil, in dem das Drucklager untergebracht ist, sind in einem gemeinsamen auf einer parallel zu den Drehachsen der Schnecke und des Gewindetriebs liegenden Führung verdrehsicher und verschiebbar gelagert. Der Aufbau dieser Vorrichtung ist aufwändig und das Austauschen von Verschleissteilen, wie die Mutter und der Gewindetrieb, verursachen lange Betriebsunterbrüche.
Aus der DE 197 31 833 C1 ist eine weitere Spritzgiessmaschine bekannt, deren konstruktiver Aufbau derjenigen der oben gewürdigten entspricht, mit dem Unterschied, dass der Antrieb des Gewindetriebs am vorderen Ende des letzteren liegt und damit der Austausch des Gewindetriebs und dessen Mutter vereinfacht wird. Beiden bekannten Vorrichtungen haftet weiter der Nachteil an, dass deren Antriebsmotoren radial beabstandet zu der Maschinenachse liegen und damit die Antriebsverbindung zwischen den Motoren und den anzutreibenden Elementen über Zahnradgetriebe oder Riementriebe zu erfolgen hat. Solche sind teuer und insbesondere Riementriebe schwierig gegen Verschmutzung zu schützen. Besonders nachteilig erweist sich die grosse Massenträgheit der Getriebe, welche von den Antriebsmotoren kompensiert werden muss. Dies bedingt höhere Antriebsleistungen der Motoren und der Kühlgeräte und führt folglich zu höheren Energiekosten.

Weiter ist aus der DE 43 44 335 C2 ein Einspritzaggregat für eine Spritzgiessmaschine bekannt, bei der das hintere Ende der Plastifizierschnecke direkt den Gewindetrieb trägt und bei der die Mutter von einem die Mutter umschlingenden Hohlwellen-Motor antreibbar ist. Der Antrieb der Plastifizierschnecke und dem mit diesem starr verbundenen Gewindetrieb erfolgt über einen zweiten, in der bekannten Schrift ebenfalls als Hohlwellen-Motor ausgebildeten Antriebsmotor. Diese Anordnung hat den Nachteil, dass beide Antriebsmotoren dieselbe Leistung aufweisen müssen, weil der Schneckenmotor während des Einspritzens, obwohl er stillsteht, das volle Drehmoment des Einspritzmotors gegenhalten muss. Im weiteren ist der Austausch der Verschleissteile (Gewindetrieb und Mutter) äusserst aufwändig und führt zu langen Betriebsunterbrüchen.

Aufgabe der vorliegenden Erfindung ist die Schaffung einer Antriebsanordnung für eine Einspritzeinheit in einer Spritzgiessmaschine, welche diese Nachteile meidet und einen einfachen, kostengünstigen herstellbaren und wartungsfreundlichen Aufbau aufweist.

Gelöst wird diese Aufgabe durch eine Antriebsanordnung mit den Merkmalen des Patentanspruchs 1. Besonders vorteilhafte Ausgestaltungen der Antriebsanordnung sind in den abhängigen Ansprüchen beschrieben.

Die erfindungsgemäss Antriebsanordnung erlaubt es, die schmutzempfindlichen Antriebsteile, wie Druck- und Radiallager, von Umgebungseinflüssen geschützt innerhalb eines Gehäuses unterzubringen. Sie umfasst zudem wesentlich weniger Elemente, die einem Verschleiss unterworfen sind und periodisch ausgewechselt werden müssen. Obwohl die der Kraftübertragung dienenden Elemente innerhalb des Gehäuses angeordnet sind, können diese mit geringem Aufwand gewartet oder ausgetauscht werden.

Anhand eines Ausführungsbeispiels wird die Erfindung näher erläutert. Es zeigen
- Figur 1: eine perspektivische Darstellung der Antriebsanordnung und dem Plastifizierzylinder,
- Figur 2: einen Axialschnitt durch die Antriebsanordnung,
- Figur 3: eine vergrösserte Darstellung des Lagergehäuses mit den Antriebselementen gemäss Figur 2 (Bereich A),
- Figur 4: einen Axialschnitt durch weitere Ausgestaltungsform der Erfindung und
- Figur 5: eine vergrösserte Darstellung des Lagergehäuses mit den Antriebselementen gemäss Figur 4.

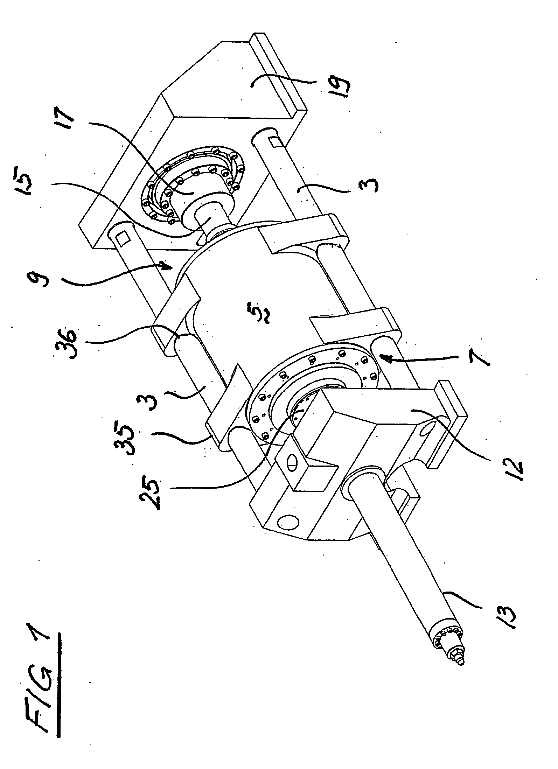

Die in Figur 1 in Vogelperspektive dargestellte Antriebsanordnung 1 umfasst zwei Führungsstangen 3, auf denen ein Lagergehäuse 5 axial verschiebbar gelagert ist. Das vordere Ende 7 des Lagergehäuses 5 wird vom Plastifizierzylinder 13 mit der Plastifizierschnecke 11 überragt. Der Plastifizierzylinder 13 durchdringt eine Stütze 12, in der die vorderen Enden der Führungsstangen 3 befestigt sind. Aus dem hinteren Ende 9 des Lagergehäuses 5 ragt ein Gewindetrieb 15, welcher in einer Mutter 17 kämmend geführt ist. Die Mutter 17 sitzt in einem Träger 19, der fest mit den beiden Führungsstangen 3 verbunden ist.

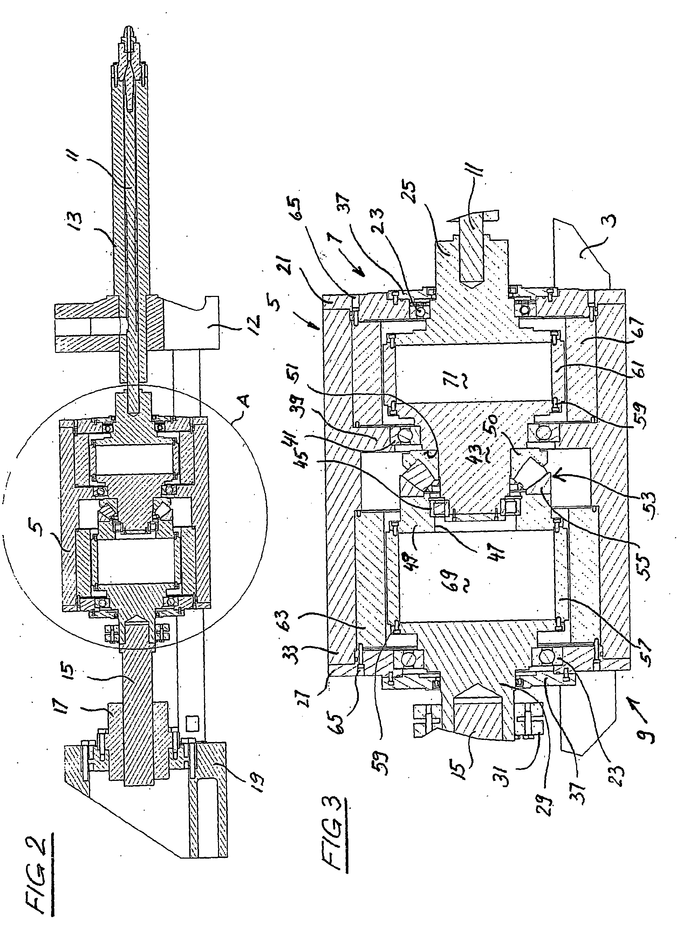

Im Axialschnitt gemäss Figur 2 und der vergrösserten Darstellung des Lagergehäuses 5 in Figur 3 sind die erfindungswesentlichen Elemente und deren gegenseitige Anordnung ersichtlich.
Das vordere Ende 7 des Lagergehäuses 5 wird durch einen ringförmigen Deckel 21 gebildet, der ein Radiallager 23 trägt. Im Radiallager 23 ist ein vorderer stufenförmiger Anschluss- oder Verbindungsflansch 25 gelagert, an dem die Plastifizierschnecke 11 drehfest, jedoch lösbar gehalten ist. Die Verbindung der Plastifizierschnecke 11 kann beispielsweise mit einer Feinkeilwelle oder mit einer Klemmvorrichtung erfolgen. Das hintere Ende 7 des Lagergehäuses 5 wird durch einen hinteren ringförmigen Deckel 27 verschlossen, der ebenfalls ein Radiallager 23 trägt. Im hinteren Radiallager 23 ist ein hinterer stufenförmiger Verbindungsflansch 29 drehbar gelagert. Dieser ist drehfest, jedoch mit geringem Aufwand lösbar mit dem vorderen Ende des Gewindetriebs 15 verbunden. Ein leicht lösbares Klemmmittel 31 hält die Verbindung zwischen dem Verbindungsflansch 29 und dem Gewindetrieb 15 aufrecht. Die beiden Verbindungsflansche 21,27 sind durch einen rohrförmigen Gehäuseteil 33 starr miteinander verbunden. Sie bilden zusammen das Lagergehäuse 5. Am Gehäuseteil 33 sind paarweise angeordnet und radial vom Gehäuseteil 33 abstehende Führungsböcke 35 mit Bohrungen 36 (siehe Figur 1) angeformt und stellen die Verbindung zu den beiden Führungsstangen 3 her. An den beiden Verbindungsflanschen 25,29 sind vorzugsweise scheibenförmige Dichtungsmittel 37 aufgesetzt, um das Eindringen von Schmutz aus der Umgebung ins Innere des Lagergehäuses 5 zu verhindern. Im Innern des zylindrischen Gehäuseteils 33 sitzt, z.B. abgestützt auf einer ringförmigen Rippe 39, ein weiteres Radiallager 41, das eine kurze, scheibenförmige Welle 43 trägt. Auf dieser Welle 43 sitzt ein gegenüber dem Lager 41 im Durchmesser wesentlich kleineres zweites Lager 45 und ist in der Bohrung 47 eines Ringes 49 abgestützt. Zwischen dem Lager 41 auf der Welle 43, axial abgestützt durch einen ersten Lagerring 50 und an einer Schulter 51 an der Welle 43, sitzt ein Druck- oder Axiallager 53. Der von der Schulter 51 abgewendete zweite Lagerring 55 des Drucklagers 53 liegt stirnseitig am Ring 49 an. Das Drucklager 53 entkoppelt den Ring 49 und folglich den Gewindetrieb vom Drehmoment der Welle 43.

Der hintere Verbindungsflansch 29 und der Ring 47 sind durch einen zylindermantelförmigen ersten Rotor 57, der mehrere Permanentmagnete umfasst, miteinander verbunden. Der Rotor 57 wird durch geeignete Befestigungsmittel 59, wie Schrauben, Stifte etc., gehalten und bildet eine starre, drehmomentübertragende Verbindung zwischen dem hinteren Verbindungsflansch 29 und dem Ring 49.

Die Welle 43 und der vordere Verbindungsflansch 25 sind durch einen zweiten Rotor 61, umfassend ebenfalls mehrere Permanentmagnete, miteinander verbunden. Geeignete Befestigungsmittel 59 dienen dazu, eine drehfeste Verbindung zwischen dem zweiten Rotor 61, der Welle 43 und dem vorderen Verbindungsflansch 25 herzustellen.

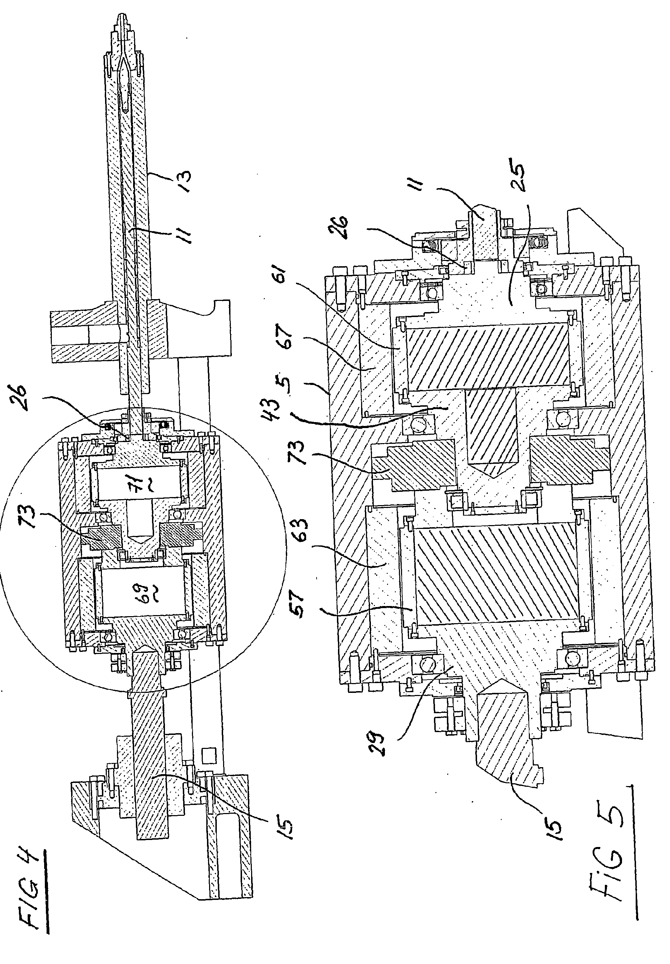

In einer weiteren Ausgestaltung der Erfindung können jeweils der hintere Verbindungsflansch 29 und der Ring 49 sowie die Welle 43 und der vordere Verbindungsflansch 25 einteilig hergestellt sein. Der zwischen den Elementen in Figur 3 (erste Ausführungsform) vorliegende Hohlraum entfällt dadurch und die Rotoren 57,61 liegen peripher auf den Verbindungsflanschen 25,29 abgestützt (vgl. in Figur 5 dort dunkel schattierte Flächen).

Im Ringraum zwischen dem ersten Rotor 57 und dem zylindrischen Gehäuseteil 33 ist ein erster Stator 63 eingesetzt und durch geeignete Mittel, z.B. durch Stifte 65, drehfest mit dem Gehäuse 5 verbunden. Analog dazu ist im Ringraum zwischen dem zweiten Rotor 61 und dem Gehäuseteil 33 ein zweiter Stator 67 eingesetzt und ebenfalls mit Stiften 65 drehfest gehalten.

Der erste Rotor 57 und.der erste Stator 63 bilden einen ersten Motor 69; der zweite Rotor 61 und der zweite Stator 67 bilden einen zweiten Motor 71. Mindestens einer der beiden Motoren 69,71 ist ein Servomotor; der zweite Motor 71, welcher die Plastifizierschnecke 11 antreibt, kann auch ein Asynchronmotor sein.

In einer weiteren Ausgestaltung der Erfindung gemäss den Figuren 4 und 5 sitzt zwischen den beiden Motoren 69,71 eine durch eine fein schraffierte Fläche 73 schematisch dargestellte Kupplung. Mit dieser können die beiden Motoren 69 und 71 temporär drehfest miteinander verbunden werden. Um ein Mitdrehen der Pastifizierschnecke 11 beim Einspritzen zu verhindern, ist zwischen der Plastifizierschnecke 11 und dem Verbindungsflansch 25 ein Freilauf 26 eingesetzt (nur durch ein schraffiertes Rechteck schematisch dargestellt).

Selbstverständlich ist im schraffierten Bereich 73, der schematisch die Kupplung darstellt, auch ein Drucklager eingebaut; wie es im ersten Ausführungsbeispiel explizit beschrieben ist.

Der besseren Übersichtlichkeit halber sind in den Figuren die Stromzuführungen sowie andere elektrische Komponenten nicht eingezeichnet.

Aus den Figuren und der Beschreibung ist ersichtlich, dass sämtliche mechanischen Teile, wie Lager, sowie die Statoren und Rotoren 57,61;63,67 vollständig innerhalb des Gehäuses 5 angeordnet sind. Die erfindungsgemässe Antriebsanordnung kommt auch ohne Getriebe oder Übertriebe, wie Riemen, Ketten etc., aus. Dies ermöglicht eine sehr kompakte einfache massearme Bauweise. Die beim Einspritzen auftretenden Axial- oder Druckkräfte werden durch das einzige Drucklager 53 aufgefangen. Die übrigen Lager 41,45 sind frei von axialen Kräften, denn das Lagergehäuse 5 kann im wesentlichen widerstandsfrei den Axialbewegungen des Gewindetriebs 15 und der Plastifizierschnecke 11 entlang der Führungsstangen 3 folgen.

Die Leistungen der beiden Motoren 69,71 können individuell an die Leistungsanforderung der Plastifizierschnecke 11 und der Einspritzvorrichtung 15 angepasst werden.

## Patentansprüche

1. Antriebsanordnung für eine Einspritzeinheit in einer Spritzgiessmaschine für die Verarbeitung von plastischem Material, umfassend
- einen axial auf einer Führung (3) verschiebbaren Plastifizierzylinder (13) mit einer durch einen ersten Motor (71) antreibbaren, im Plastifizierzylinder (13) drehbar gelagerten Plastifizierschnecke (11),
- einen zweiten Motor (69) zum Antreiben der Einspritzvorrichtung,
- eine Einspritzvorrichtung zum axialen Bewegen der Plastifizierschnecke (11),
- ein auf der Führung (3) axial verschiebbares Lagergehäuse (5) mit einem Drucklager (53) zur Übertragung der von der Einspritzvorrichtung auf die Plastifizierschnecke (11) ausgeübten axialen Schubkraft während des Plastifizier- und Einspritzzyklus sowie je ein Radiallager (41,45) für im Lagergehäuse (5) gelagerte Verbindungsflansche (25,29) zur Plastifizierschnecke (11) und zu einem Gewindetrieb (15) der Einspritzvorrichtung,
**dadurch gekennzeichnet, dass**
der erste Verbindungsflansch (25) einen ersten Rotor (61) und der zweite Verbindungsflansch (29) einen zweiten Rotor (57) tragen und dass die dazugehörigen Statoren (63,67) drehfest mit dem Lagergehäuse (5) zum Direktantrieb der Plastifizierschnecke (1) und dem Gewindetrieb (15) der Einspritzeinheit verbunden sind.

2. Antriebsordnung nach Anspruch 1, **dadurch gekennzeichnet, dass** der erste Rotor (61) mit dem einen Ende auf dem ersten Verbindungsflansch (25) und mit dem zweiten Ende auf einer im Lagergehäuse (5) gelagerten Welle (43) aufliegt und eine drehfeste Verbindung zwischen dem ersten Verbindungsflansch (25) und der Welle (43) herstellt.

3. Antriebsordnung nach einem der Ansprüche 1 oder 2, **dadurch gekennzeichnet, dass** der zweite Rotor (57) mit dem einen Ende auf dem zweiten Verbindungsflansch (29) und mit dem zweiten Ende auf einem auf der Welle (43) drehbar gelagerten Ring (49) aufliegt und eine drehfeste Verbindung zwischen dem zweiten Verbindungsflansch (29) und dem Ring (49) herstellt.

4. Antriebsordnung nach Anspruch 3, **dadurch gekennzeichnet, dass** das Drucklager (53) einerseits stirnseitig am Ring (49) und anderseits an einer Schulter (51) an der Welle (43) abgestützt ist.

5. Antriebsordnung nach Anspruch 1, **dadurch gekennzeichnet, dass** das Drucklager (53) direkt zwischen den beiden Verbindungsflanschen (25,29) angeordnet ist.

6. Antriebsordnung nach einem der Ansprüche 1 bis 5, **dadurch gekennzeichnet, dass** die Statoren (63,67) drehfest mit dem Lagergehäuse (5) verbunden sind.

7. Antriebsordnung nach einem der Ansprüche 1 bis 6, **dadurch gekennzeichnet, dass** zwischen den beiden Verbindungsflanschen (25,29) oder zwischen der Welle (43) und dem Ring (49) eine Kupplung (73) angeordnet ist und dass die Plastifizierschnecke (11) über eine Freilaufkupplung (26) mit dem ersten Verbindungsflansch (25) verbunden ist.

8. Antriebsordnung nach einem der Ansprüche 1 bis 7, **dadurch gekennzeichnet, dass** der Gewindetrieb (15) mit einem Klemmmittel (31) am hinteren Verbindungsflansch (29) lösbar befestigt ist.

## Claims

1. A drive arrangement for an injection unit in an injection moulding machine for processing plastic material, comprising
- a plasticising cylinder (13) which is displaceable axially on a guide (3) and with a plasticising screw (11) which may be driven by a first motor (71) and which is rotatably mounted in the plasticising cylinder (13),
- a second motor (69) for driving the injection device,
- an injection device for axially moving the plasticising screw (11),
- a bearing housing (5) axially displaceable on the guide (3), and with a thrust bearing (53) for transmitting the axial thrust force exerted by the injection device on the plasticising screw (11) during the plasticising cycle and injection cycle, as well as in each case a radial bearing (41, 45) for connection flanges (25, 29) mounted in the bearing housing (5), to the plasticising screw (11) and to a thread drive (15) of the injection device,
**characterised in that**
the first connection flange (25) carries a first rotor (61), and the second connection flange (29) carries a second rotor (57), and that the associated stators (63, 67) are connected in a rotationally fixed manner to the bearing housing (5) for the direct drive of the plasticising screw (1), and to the thread drive (15) of the injection unit.

2. A drive arrangement according to claim 1, **characterised in that** the first rotor (61) with one end lies on the first connection flange (25), and with the second end lies on a shaft (43) mounted in the bearing housing (5), and creates a rotationally fixed connection between the first connection flange (25) and the shaft (43).

3. A drive arrangement according to one of the claims 1 or 2, **characterised in that** the second rotor (57) with the one end lies on the second connection flange (29), and with the second end lies on a ring (49) rotatably mounted on the shaft (43), and creates a rotationally fixed connection between the second connection flange (29) and the ring (49).

4. A drive arrangement according to claim 3, **characterised in that** the thrust bearing (53) on the one hand is supported on the end-side on the ring (49) and on the other hand on a shoulder (51) on the shaft (43).

5. A drive arrangement according to claim 1, **characterised in that** the thrust bearing (53) is arranged directly between the two connection flanges (25,29).

6. A drive arrangement according to one of the claims 1 to 5, **characterised in that** the stators (63, 67) are connected to the bearing housing (5) in a rotationally fixed manner.

7. A drive arrangement according to one of the claims 1 to 6, **characterised in that** a coupling (73) is arranged between the two connection flanges (25, 29) or between the shaft (43) and the ring (49), and that the plasticising screw (11) is connected via a free-running clutch (26) to the first connection flange (25).

8. A drive arrangement according to one of the claims 1 to 7, **characterised in that** the threaded drive (15) is releasably fastened to a clamping means (31) on the rear connection flange (29).

## Revendications

1. Ensemble d'entraînement pour une unité d'injection dans une machine de moulage par injection destinée à l'usinage de matériau plastique, comportant :
- un cylindre de plastification (13) qui peut être déplacé axialement sur un guidage (3) et qui est muni d'une vis de plastification (11) pouvant être entraînée par un premier moteur (71) et montée avec faculté de rotation dans le cylindre de plastification (13),
- un second moteur (69) pour l'entraînement du dispositif d'injection,
- un dispositif d'injection pour le déplacement axial de la vis de plastification (11),
- un logement de palier (5) qui peut être déplacé axialement sur le guidage (3) et qui est muni d'un palier de butée (53) pour la transmission de la force de cisaillement axiale exercée par le dispositif d'injection sur la vis de plastification (11) pendant le cycle de plastification et d'injection ainsi que d'un palier radial (41, 45) pour chacune des brides de liaison (25, 29) montées dans le logement de palier (5) par rapport à la vis de plastification (11) et à un entraînement fileté (15) du dispositif d'injection,
**caractérisé en ce que**
la première bride de liaison (25) porte un premier rotor (61) et la seconde bride de liaison (29) porte un second rotor (57) et **en ce que** les stators (63, 67) qui y sont associés sont reliés de manière solidaire en rotation au logement de palier (5) par rapport à l'entraînement direct de la vis de plastification (11) et à l'entraînement fileté (15) de l'unité d'injection.

2. Ensemble d'entraînement selon la revendication 1, **caractérisé en ce que** le premier rotor (61) s'appuie par la une extrémité sur la première bride de liaison (25) et par la seconde extrémité sur un arbre (43) monté dans le logement de palier (5) et **en ce qu'**il établit une liaison solidaire en rotation entre la première bride de liaison (25) et l'arbre (43).

3. Ensemble d'entraînement selon l'une ou l'autre des revendications 1 et 2, **caractérisé en ce que** le second rotor (57) s'appuie par la une extrémité sur la seconde bride de liaison (29) et par la seconde extrémité sur un tronçon de cylindre court (49) monté avec faculté de rotation sur l'arbre (43) et **en ce qu'**il établit une liaison solidaire en rotation entre la seconde bride de liaison (29) et le tronçon de cylindre court (49).

4. Ensemble d'entraînement selon la revendication 3, **caractérisé en ce que** le palier de butée (53) est soutenu d'une part sur le tronçon de cylindre court (49) sur le côté frontal et d'autre part sur un épaulement (51) sur l'arbre (43).

5. Ensemble d'entraînement selon la revendication 1, **caractérisé en ce que** le palier de butée (53) est agencé directement entre les deux brides de liaison (25,29).

6. Ensemble d'entraînement selon l'une des revendications 1 à 5, **caractérisé en ce que** les stators (63, 67) sont reliés de manière solidaire en rotation au logement de palier (5).

7. Ensemble d'entraînement selon l'une des revendications 1 à 6, **caractérisé en ce qu'**un accouplement (73) est agencé entre les deux brides de liaison (25, 29) ou entre l'arbre (43) et le tronçon de cylindre court (49) et **en ce que** la vis de plastification (11) est reliée à la première bride de liaison (25) par l'intermédiaire d'un accouplement à roue libre (26).

8. Ensemble d'entraînement selon l'une des revendications 1 à 7, **caractérisé en ce que** l'entraînement fileté (15) est fixé de manière amovible sur la bride de liaison arrière (29) par l'intermédiaire d'un moyen de serrage (31).
